# FASCICULE DE BREVET EUROPEEN

(11) **EP 2 323 797 B1**
(45) Date de publication et mention de la délivrance du brevet: **20.11.2013**
(21) Numéro de dépôt: 09804601.4
(22) Date de dépôt: 16.06.2009
(51) Int. Cl.: B23K 1/00, B23K 1/002, B23K 3/047, B23K 3/08

(54) **PROCEDE DE CONTROLE DE LA VARIATION DE L'ECARTEMENT DES PIECES PENDANT LE BRASAGE PAR INDUCTION EN TRANSPARENCE**
VERFAHREN ZUM KONTROLLIEREN DER VARIIERUNG DER TRENNUNG VON TEILEN BEI RÜCKSEITIGEM INDUKTIONSHARTLÖTEN
METHOD OF CONTROL OF THE VARIATION OF THE SEPARATION OF PIECES DURING BACKSIDE INDUCTION BRAZING

(30) Priorité: 08.08.2008 FR 0804523
(43) Date de publication de la demande: 25.05.2011
(73) Titulaire: Renault S.A.S., 92100 Boulogne-Billancourt (FR)
(72) Inventeur: VERSCHAVE, Christophe, F-91430 Vauhallan (FR)
(86) Numéro de dépôt international: PCT/FR2009/051135
(87) Numéro de publication internationale: WO 2010/015760

(56) Documents cités:
- FR-A- 2 911 294
- JP-A- 7 009 120
- JP-A- 63 203 275
- US-A- 5 093 545
- US-A1- 2007 099 412

## Description

La présente invention concerne un procédé de contrôle pour un brasage par induction en transparence, conformément au préambule de la revendication 1.

Le brasage par induction en transparence mono-accès consiste à solidariser deux pièces métalliques par une brasure apportée entre les deux pièces et qui est chauffée par induction à l'aide d'un inducteur disposé au voisinage des deux pièces accolées et développant un champ magnétique à haute fréquence qui traverse au moins partiellement les pièces métalliques.

La liaison entre les deux pièces n'est pas visible et il faut donc trouver un moyen non visuel de s'assurer de la bonne qualité de la brasure en surveillant un ou plusieurs paramètres du procédé de brasage.

L'invention a pour but de proposer un tel moyen de contrôle.

Le document JP 07 009120 fait connaître un procédé de brasage par induction en transparence présentant les étapes indiquées dans le préambule de la revendication 1 annexée.

Le document US 2007/099412 enseigne un procédé de fabrication de pièces électroniques semi-conductrices raccordées par soudure sur une plaque de circuit, selon lequel on maintient les deux éléments raccordés à une distance prédéfinie constante tout au long de la fabrication en chaîne de ces pièces électroniques.

Le document JP 63 203275 enseigne l'utilisation d'un capteur optique pour effectuer des mesures de distance.

L'invention atteint son but grâce à un procédé de contrôle pour un procédé de brasage conforme à la revendication 1 annexée.

Ainsi, selon l'invention, le contrôle de la variation de l'écartement des deux faces confrontées pendant la fusion du fil de brasure permet de s'assurer que le fil a bien fondu. Il peut être avantageux de surveiller parallèlement un ou plusieurs autres paramètres, notamment la quantité d'énergie utilisée en totalité dans la phase d d'activation de l'inducteur, cette quantité d'énergie devant se situer dans une plage de valeurs prédéterminées qui montre que le processus de chauffage s'est déroulé sans dysfonctionnement.

Pour apprécier la variation de l'écartement entre les faces confrontées, ou du moins sa variation au cours de l'étape de chauffage par induction, on peut contrôler la course des moyens de serrage, mais de manière préférée, on mesure directement un déplacement de l'une des deux pièces, l'autre pièce étant maintenue immobile pendant la phase d d'activation de l'inducteur. Avantageusement, on utilise pour ce faire un capteur optique, lequel n'est pas perturbé par le champ magnétique de l'inducteur.

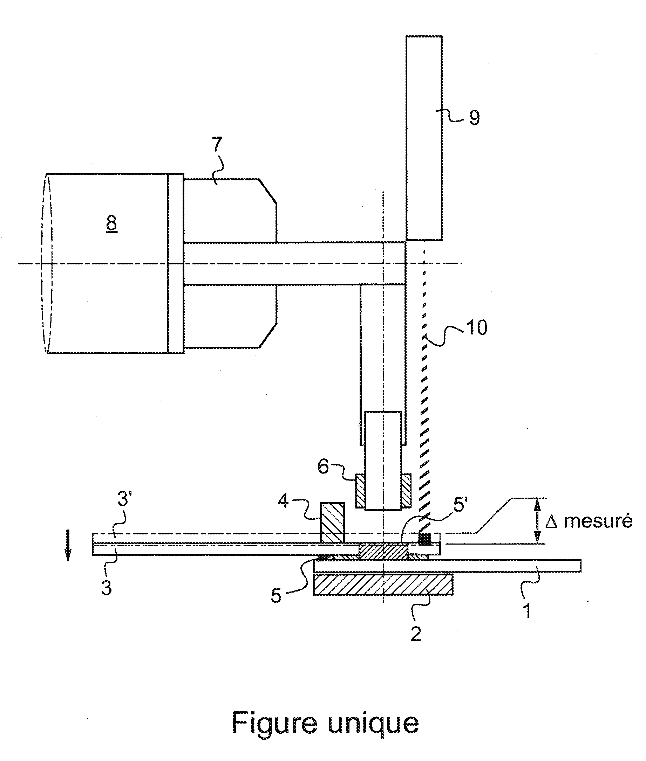

D'autres caractéristiques et avantages de l'invention ressortiront de la description suivante d'un exemple de réalisation. Il sera fait référence à la figure unique annexée représentant de manière schématique une installation de brasage équipée d'un dispositif de contrôle pouvant être utilisé dans la methode conforme à l'invention.

On a représenté sur la figure une tôle fixe inférieure 1 s'appuyant contre un appui fixe 2 et une tôle mobile supérieure 3 serrée en permanence vers la tôle fixe 1 par un appui mobile 4, les appuis 2 et 4 constituant un exemple de dispositif de serrage. Cette technique mono-accès permet l'assemblage sur un corps creux (profilé, etc.) auquel cas le contre-appui 2 sera alors déporté voire supprimé si la rigidité du corps creux est suffisante. On n'a représenté qu'un seul appui 4 pour la simplicité de la figure, il va de soi qu'on peut placer plusieurs appuis, de préférence répartis autour de la zone à assembler. Il peut s'agir par exemple de dispositifs de serrage compensatifs pneumatiques. D'une façon générale, il peut s'agir de tout type de dispositif de serrage à force constante ou variable. On a représenté sur la même figure en traits mixtes la position 3' de la tôle en début du procédé de brasage, la position représentée en 3 étant celle prise par la tôle en fin de brasage. Les deux tôles sont partiellement confrontées, face à face, dans une zone où elles doivent être liées et définissent un certain écartement entre elles.

On a aussi représenté sur la même figure le fil de brasure 5' dans son état initial, sous la forme d'un fil plat à section rectangulaire, intercalé entre les deux tôles à assembler 1 et 3'. Le fil 5' peut être pré-positionné dans un embouti local formé dans la tôle 1. La hauteur du fil 5' (moins celle de l'embouti) définit le jeu initial entre les deux tôles 1 et 3'.

Un inducteur 6, porté par un corps 7 doté de moyens d'activation 8, peut venir au voisinage des deux tôles dans la zone à assembler, par exemple comme représenté ici, au-dessus de la tôle supérieure 3'. Lorsque l'inducteur 6 est activé, le champ magnétique traverse au moins partiellement la tôle 3' et provoque le chauffage inductif du fil de brasure 5'. Celui-ci va donc s'affaisser progressivement et se répartir par capillarité. Du fait du serrage permanent entre les tôles, le jeu entre les deux tôles 1 et 3' va donc évoluer depuis une valeur initiale maximale, par exemple d'environ 3 mm, jusqu'à une valeur finale minimum obtenue quand le fil a formé la brasure étalée 5, par exemple 1 mm à 0,5 mm près. La tôle supérieure est alors passée de sa position 3' à sa position 3, et la variation de l'écart Δ entre les deux positions est mesurée grâce à un capteur optique 9 envoyant un rayon 10 sur la tôle mobile 3, 3', au voisinage immédiat de l'inducteur 6 et donc de la zone de brasage. Cette variation de l'écart Δ doit être comprise dans une plage de déplacement prédéfinie (dans l'exemple précédent, sensiblement entre 1,5 mm et 2,5 mm), qui permet de s'assurer que la brasure, dans son intervalle de fusion, est bien passée en phase liquidus.

Le capteur optique 9 est avantageusement lié mécaniquement au corps 7 de l'inducteur 6. Il peut être intégré dans la chaîne de mesure du générateur d'induction ou géré séparément, en utilisant les informations de début et de fin de cycle de chauffe pour lancer deux acquisitions et réaliser une comparaison entre ces deux mesures pour vérifier si l'affaissement de la tôle supérieure 3', 3 est bien compris dans la plage prédéfinie.

Par ailleurs, le corps 7 de l'inducteur 6 peut également être doté avantageusement de tout type de moyens permettant d'arrêter l'induction, une fois qu'il a été constaté, par le contrôle de la variation de l'écartement, que la brasure est bien en phase liquidus.

## Revendications

1. Procédé de contrôle pour un procédé de brasage comprenant les étapes consistant à :
a)-disposer au moins partiellement face à face deux pièces (1 ; 3, 3') à solidariser avec un fil de brasure plat (5, 5') intercalé entre les deux pièces,
b)-serrer les deux pièces (1 ; 3, 3') l'une vers l'autre au moyen d'un dispositif de serrage (2, 4),
c)-disposer un inducteur (6) au voisinage des deux pièces (1 ; 3, 3') et
d)-activer l'inducteur pour faire fondre par induction le fil de brasure intercalé (5, 5'), le serrage des deux pièces (1 ; 3, 3') étant maintenu pendant cette étape, **caractérisé en ce qu'**il comprend aussi l'étape consistant à :
e)-contrôler la variation de l'écartement entre les faces confrontées des deux pièces (1 ; 3, 3') pendant la phase d d'activation de l'inducteur (6) de manière que cette variation quand elle est comprise dans une plage de déplacement définie permette d'assurer que la brasure est bien passée en phase liquidus.

2. Procédé selon la revendication 1, **caractérisé en ce qu'**on surveille la quantité d'énergie utilisée en totalité dans la phase d d'activation de l'inducteur (6).

3. Procédé selon l'une quelconque des revendications 1 ou 2, **caractérisé en ce qu'**on mesure directement un déplacement de l'une (3, 3') des deux pièces (1 ; 3, 3'), l'autre pièce (1) étant maintenue immobile pendant la phase d d'activation de l'inducteur.

4. Procédé selon la revendication 3, **caractérisé en ce qu'**on utilise pour ce faire un capteur optique (9).

## Patentansprüche

1. Kontrollverfahren für ein Lötverfahren, das die Schritte enthält, die darin bestehen:
a) zwei mit einem zwischen die zwei Bauteile eingefügten flachen Lötdraht (5, 5') fest zu verbindende Bauteile (1; 3, 3') zumindest teilweise einander gegenüber anzuordnen,
b) die zwei Bauteile (1; 3, 3') mittels einer Klemmvorrichtung (2, 4) zueinander zu drücken,
c) einen Induktor (6) in der Nähe der zwei Bauteile (1; 3, 3') anzuordnen, und
d) den Induktor zu aktivieren, um durch Induktion den eingefügten Lötdraht (5, 5') schmelzen zu lassen, wobei das Zusammendrücken der zwei Bauteile (1; 3, 3') während dieses Schritts beibehalten wird,
**dadurch gekennzeichnet, dass** es außerdem den Schritt enthält, der darin besteht:
e) die Veränderung des Abstands zwischen den einander gegenüberliegenden Seiten der zwei Bauteile (1; 3, 3') während der Aktivierungsphase d des Induktors (6) so zu steuern, dass diese Veränderung, wenn sie in einem definierten Verschiebebereich liegt, es ermöglicht zu gewährleisten, dass das Lot tatsächlich in die Liquidusphase übergegangen ist.

2. Verfahren nach Anspruch 1, **dadurch gekennzeichnet, dass** die insgesamt während der Aktivierungsphase d des Induktors (6) verwendete Energiemenge überwacht wird.

3. Verfahren nach einem der Ansprüche 1 oder 2, **dadurch gekennzeichnet, dass** eine Verschiebung des einen (3, 3') der zwei Bauteile (1; 3, 3') direkt gemessen wird, während das andere Bauteil (1) während der Aktivierungsphase d des Induktors unbeweglich gehalten wird.

4. Verfahren nach Anspruch 3, **dadurch gekennzeichnet, dass** hierzu ein optischer Sensor (9) verwendet wird.

## Claims

1. Control method for a brazing method comprising the steps consisting in:
a) arranging at least partially face to face two workpieces (1; 3, 3') to be secured with a flat brazing wire (5, 5') inserted between the two workpieces,
b) clamping the two workpieces (1; 3, 3') towards one another by means of a clamping device (2, 4),
c) arranging an inductor (6) in the vicinity of the two workpieces (1; 3, 3'), and
d) activating the inductor to melt by induction the inserted brazing wire (5, 5'), the clamping of the two workpieces (1; 3, 3') being maintained during this step, **characterized in that** it also comprises the step consisting in:
e) controlling the variation of the separation between the opposed faces of the two workpieces (1; 3, 3') during the phase d of activating the inductor (6) in such a way that this variation, when it lies within a defined movement range, makes it possible to ensure that the braze has passed well into the liquidus phase.

2. Method according to Claim 1, **characterized in that** the amount of energy used in total is monitored in the phase d of activating the inductor (6).

3. Method according to either one of Claims 1 and 2, **characterized in that** a movement of one (3, 3') of the two workpieces (1; 3, 3') is measured directly, the other workpiece (1) being maintained immobile during the phase d of activating the inductor.

4. Method according to Claim 3, **characterized in that** an optical sensor (9) is used for this process.
